# FASCICULE DE BREVET EUROPEEN

(11) **EP 2 558 512 B1**
(45) Date de publication et mention de la délivrance du brevet: **26.12.2018**
(21) Numéro de dépôt: 11713314.0
(22) Date de dépôt: 04.03.2011
(51) Int. Cl.: C08K 5/00, C08K 5/053, C08L 23/00, C08L 51/00, C08L 51/06, C08L 23/12, C08J 3/00, C08G 18/64, C08L 3/02

(54) **THERMOPLASTIOUES A BASE DE FARINE VEGETALE PLASTIFIEE ET COMPOSITIONS AINSI OBTENUES**
THERMOPLASTEN MIT WEICHGEMACHTEM PFLANZENMEHL UND RESULTIERENDE ZUSAMMENSETZUNGEN
THERMOPLASTICS CONTAINING PLASTICIZED VEGETABLE FLOUR AND RESULTING COMPOSITIONS

(30) Priorité: 14.04.2010 FR 1052839
(43) Date de publication de la demande: 20.02.2013
(73) Titulaire: Carbios, 63360 Saint-Beauzire (FR)
(72) Inventeur: GIMENEZ, Jérôme, F-69100 Villeurbanne (FR); BARTHOMEUF, Kevin, F-69008 Lyon (FR); LAGNEAUX, Didier, F-74290 Bluffy (FR)
(74) Mandataire: Lebrette, Camille
(86) Numéro de dépôt international: PCT/FR2011/050460
(87) Numéro de publication internationale: WO 2011/128536

(56) Documents cités:
- WO-A1-03/006545
- WO-A2-2009/095618
- US-A1- 2006 043 629
- US-B1- 6 576 246
- BEG M D H ET AL: "Corn gluten meal as a biodegradable matrix material in wood fibre reinforced composites", MATERIALS SCIENCE AND ENGINEERING A: STRUCTURAL MATERIALS:PROPERTIES, MICROSTRUCTURE & PROCESSING, LAUSANNE, CH, vol. 412, no. 1-2, 5 décembre 2005 (2005-12-05), pages 7-11, XP025304146, ISSN: 0921-5093, DOI: DOI:10.1016/J.MSEA.2005.08.015 [extrait le 2005-12-05]

## Description

### DOMAINE DE L'INVENTION

La présente invention concerne un nouveau procédé de préparation de compositions thermoplastiques non biodégradables à base de farine végétale et les compositions ainsi obtenues.

### ETAT ANTERIEUR DE LA TECHNIQUE

On entend par « composition thermoplastique » dans la présente invention une composition qui, de manière réversible, se ramollit sous l'action de la chaleur et se durcit en se refroidissant. Elle présente au moins une température dite de transition vitreuse (Tv) en dessous de laquelle la fraction amorphe de la composition est à l'état vitreux cassant, et au-dessus de laquelle la composition peut subir des déformations plastiques réversibles. La température de transition vitreuse ou l'une, au moins, des températures de transition vitreuse de la composition thermoplastique à base de farine végétale de la présente invention est de préférence comprise entre -50 et 150°C. Cette composition à base de farine végétale peut, bien entendu, être mise en forme par les procédés utilisés traditionnellement en plasturgie (extrusion, injection, moulage, soufflage, calandrage etc.). Sa viscosité, mesurée à une température de 100 °C à 200°C, est généralement comprise entre 10 et 10⁶ Pa.s.

De préférence, ladite composition est «thermo-fusible», c'est-à-dire qu'elle peut être mise en forme sans application de forces de cisaillement importantes, c'est à dire par simple écoulement ou par simple pressage de la matière fondue. Sa viscosité, mesurée à une température de 100°C à 200°C, est généralement comprise entre 10 et 10³ Pa.s.

Dans le contexte actuel de perturbations climatiques dues à l'effet de serre et au réchauffement planétaire, de l'évolution à la hausse des coûts des matières premières fossiles, en particulier du pétrole dont sont issues les matières plastiques, de l'état de l'opinion publique en quête d'un développement durable, de produits plus naturels, plus propres, plus sains et moins dispendieux en énergie, et de l'évolution des réglementations et des fiscalités, il est nécessaire de disposer de nouvelles compositions issues de ressources renouvelables, qui conviennent en particulier au domaine des matériaux plastiques, et qui soient à la fois compétitives, conçues dès l'origine pour n'avoir que peu ou pas d'impacts négatifs sur l'environnement, et techniquement aussi performantes que les polymères préparés à partir de matières premières d'origine fossiles.

La farine végétale constitue une matière première présentant les avantages d'être renouvelable et disponible en grandes quantités à un prix économiquement intéressant par rapport au pétrole et au gaz utilisés comme matières premières pour les plastiques actuels.

On entend par farine végétale au sens de l'invention les matières biosourcées résultantes de la mouture
- des céréales telles que le blé, le seigle, le triticale, le maïs, l'orge, le sorgho ou le riz,
- des tubercules telles que le manioc ou la pomme de terre,
- des légumineuses telles que le soja et le pois.

Le caractère biodégradable de farine végétale a été exploité dans la fabrication de matières plastiques biodégradables.

Par exemple, le document WO/2009/068805 décrit un système plastifiant de compositions biodégradables constituées d'au moins un polymère synthétique ou biosourcé et d'au moins une farine végétale. Il n'y a pas dans ce document d'étape ultérieure de modification de la farine plastifiée.

Le document WO/2000/014154 décrit également un matériau biodégradable constitué d'au moins un polymère et d'au moins une farine céréalière. Il n'est pas fait référence à la présence d'agent plastifiant.

Le document WO 03/006545 A1, et notamment les exemples 4 et 5, décrit une composition thermoplastique biodégradable comprenant en outre un polymère (polyoléfine), de la poudre de riz, un « plastifiant » (calcium stéarate), et un agent couplant (vinyl triméthoxysilane). Cette composition est obtenue par introduction simultanée des constituants dans une extrudeuse, mélangeage et extrusion. L'agent couplant de ce document permet notamment d'améliorer la compatibilité entre le polymère synthétique et la poudre de riz. Le plastifiant est ajouté pour améliorer la compatibilité entre la poudre de riz et le polymère synthétique, et pour améliorer les propriétés physiques, la processabilité et la filmabilité de la matière. Le plastifiant peut être un stéarate de zinc, de calcium, de barium, d'aluminium ou de magnésium, ou encore une cire de paraffine ou de polyéthylène. Ces composés appelés « plastifiant » sont en fait des procesing aids (agent lubrifiant) facilitant la transformation/mise en oeuvre de la matière. Il ne s'agit pas de plastifiants de la farine.

Le document WO 2009/095618 A2 décrit un procédé de préparation d'une composition thermoplastique à base d'amidon plastifié, dans lequel une composition plastifiée est préparée par mélange thermomécanique d'un amidon et d'un plastifiant organique. Ensuite, une substance fonctionnelle (polymère) peut éventuellement être incorporée. Ce n'est qu'ensuite qu'un agent de liaison est incorporé, donc après l'incorporation du polymère (substance fonctionnelle).

Le document US 6,576,246 décrit une composition biodégradable à base d'amidon, d'un polymère synthétique (polyéthylène), et de fibres. Le procédé mis en oeuvre pour préparer cette composition comprend simplement le mélangeage de tous les composants et Pextrusion du mélange résultant à 300°F. En outre, l'agent de liaison de ce document assure la liaison physique ou chimique entre les fibres et la matrice d'amidon.

Le document US 2006/0043629 A1 décrit une composition biodégradable comprenant de la farine de soja plastifiée, un polymère synthétique biodégradable (polyester amide) et un agent compatibilisant (polyéthylène greffé avec l'anhydride maléique) entre la farine plastifiée et le polymère synthétique.

Le document Materials Science & Engineering A vol. 412, 2005, pages 7-11 décrit un matériau biodégradable à base de gluten de maïs pour renforcer un composite de fibres de bois. Il ne s'agit pas de farine, la farine de maïs ne comprenant pas de gluten.

Les farines végétales au sens de l'invention sont constituées en partie d'amidon.

Dans le cadre de recherches visant à mettre au point des matériaux polymères non biodégradables, présentant une teneur importante en amidon, l'introduction dans une matrice polymérique, par exemple dans une matrice polyoléfinique, d'un composant amylacé préalablement plastifié par un agent plastifiant approprié, a récemment été envisagée. Les procédés divulgués dans les documents WO/2009/095622 et WO/2009/095618 comprennent notamment le mélange thermomécanique d'un amidon granulaire et d'un agent plastifiant pour la préparation, par extrusion, de granulés d'une composition amylacée thermoplastique. Les granulés d'amidon plastifié obtenus sont ensuite incorporés dans une matrice de polymère synthétique fondu, par exemple du polypropylène fondu. Il a été démontré que la présence d'un agent bifonctionnel, tel que le méthylènediphényl-diisocyanate (MDI), capable de réagir avec le plastifiant et le composant amylacé, voire aussi avec le polymère, permet d'obtenir des compositions à haute teneur en composant amylacé présentant d'intéressantes propriétés mécaniques.

### EXPOSE DE L'INVENTION

Dans le cadre de ses travaux, le Demandeur a constaté que de manière tout à fait surprenante et inattendue, le composant amylacé pouvait être remplacé par une farine végétale, tout en conservant voire en améliorant avantageusement les propriétés mécaniques et rhéologiques des matériaux polymères non biodégradables obtenus. On peut rappeler que l'expression « farine végétale » utilisée dans l'invention, décrit les matières biosourcées résultantes de la mouture
- des céréales telles que le blé, le seigle, le triticale, le maïs, l'orge, le sorgho ou le riz
- des tubercules telles que le manioc ou la pomme de terre
- des légumineuses telles que le soja et le pois
dont les compositions en fonction des matières végétales de base sont les suivantes (pourcentages pondéraux)
- teneur en eau comprise entre 0 et 20%
- teneur en composés carbohydratés comprise entre 0 et 85% dont teneur en amidon comprise entre 0 et 80%
- teneur en protéine comprise entre 0 et 30%
- teneur en acides gras comprise entre 0 et 10%
- teneur en minéraux comprise entre 0 et 5%
- teneur en fibres comprise en 0 et 20%.

Par composés carbohydratés, protéines, acides gras, minéraux et fibres, on entend les multiples composés décrits de manière classique par de nombreux auteurs de référence dans le domaine de compositions des matières céréalières. Citons par exemple : « La composition des aliments. Tableaux des valeurs nutritives » - Souci/Pachmann/Kraut - 5ème Edition - CRC Press.

Le tableau 1 présente à titre d'exemple des farines végétales utilisables selon l'invention : des farines de blé (type T55), de maïs et de blé complet.

**Tableau I**

| | Eau | Amidon | Fibres | Protéines | Acides gras | Reste |
|---|---|---|---|---|---|---|
| Farine de blé T55 | 13.7% | 70.6% | 4.1% | 9.84% | 1.13% | 0.63% |
| Farine de blé complet | 13.2% | 58.16% | 10.3% | 11.73% | 2.00% | 4.61% |
| Farine de maïs | 12% | 66.29% | 9.42% | 8.31% | 2.82% | 1,16% |

Du fait de la présence de protéines, d'acides gras et de fibres, on pouvait s'attendre à une nette dégradation des performances mécaniques par rapport aux matériaux polymères obtenus à partir d'amidon plastifié.

Cependant dans la mesure où ces composés possèdent des fonctions à hydrogène actif capable de réagir avec le composé bi fonctionnel tel que le méthylènediphényl- diisocyanate (MDI), au même titre que le plastifiant et l'amidon, les propriétés mécaniques et rhéologiques des matériaux polymères non biodégradables obtenus, non seulement ne sont pas dégradées, mais sont avantageusement améliorées.

La présente invention a pour objet un procédé de préparation d'une composition thermoplastique non biodégradable à base de farine végétale comprenant les étapes suivantes :
(a) sélection d'au moins une farine végétale (composant 1) et d'au moins un plastifiant organique (composant 2) de cette farine végétale,
(b) préparation d'une composition plastifiée par mélange thermomécanique de cette farine végétale et de ce plastifiant organique,
(c) préparation d'une farine plastifiée thermoplastique par mélange thermomécanique après incorporation, dans la farine végétale plastifiée obtenue, d'un agent de liaison A (composant 3) porteur d'au moins deux groupements fonctionnels aptes à réagir avec des molécules porteuses de fonctions à hydrogène actif et capables de permettre la fixation, par liaisons covalentes, d'au moins une partie de l'agent plastifiant et d'au moins une partie des acides gras et des protéines contenus dans la farine végétale, ledit agent de liaison ayant une masse molaire inférieure à 5000 g/mol, et étant choisi parmi les diacides et les composés porteurs d'au moins deux fonctions, libres ou masquées, identiques ou différentes, choisies parmi les fonctions isocyanate, carbamoyl- caprolactame, époxyde, halogéno, anhydride d'acide, halogénure d'acyle, oxychlorure, trimétaphosphate et alcoxysilane.
(d) incorporation et dispersion fine par mélange thermomécanique de la farine plastifiée thermoplastique obtenue à l'étape (c) dans au moins un polymère synthétique non biodégradable (composant 4) et éventuellement un agent de liaison B (composant optionnel 5), permettant de lier par liaisons covalentes la composition plastifiée au polymère synthétique.

Les compositions thermoplastiques selon la divulgation se distinguent ainsi des matériaux plastiques et analogues proposés dans l'art antérieur par le fait qu'elles sont obtenues à partir de farine végétale et non d'amidon et qu'elles ne sont pas biodégradables.

On entend au sens de l'invention par farine végétale (composant 1) toutes les farines résultantes de la mouture des céréales, des tubercules et des légumineuses telles que définies ci-avant.

Ces farines peuvent être également des farines enrichies en amidon par purification des farines issues de la mouture permettant notamment d'extraire une partie des protéines, acides gras et minéraux.

La farine végétale au sens de l'invention contient avantageusement entre 10 et 95% en poids d'amidon, de préférence entre 20 et 80% en poids d'amidon, encore plus préférentiellement entre 35 et 70% en poids d'amidon.

On entend par « plastifiant de la farine végétale » (composant 2), toute molécule organique capable de plastifier la farine végétale. Plus précisément, le plastifiant de la farine végétale est une molécule organique ayant de préférence une masse molaire inférieure à 5000 g/mol et en particulier inférieure à 1000 g/mol, qui, lorsqu'elle est incorporée à la farine végétale par un traitement thermomécanique à une température comprise entre 20 et 200°C aboutit à une diminution de la température de transition vitreuse et/ou à une réduction de la cristallinité de l'amidon qu'elle contient jusqu'à une valeur inférieure à 15 %, voire à un état essentiellement amorphe. Cette définition de l'agent plastifiant n'englobe pas l'eau, qui, bien qu'elle ait un effet de plastification de la farine végétale, présente l'inconvénient majeur d'inactiver la plupart des fonctions susceptibles d'être présentes sur l'agent de réticulation, telles que les fonctions isocyanate.

On entend par « agent de liaison A » (composant 3), toute molécule porteuse d'au moins deux groupements fonctionnels, libres ou masquées, aptes à réagir avec des molécules porteuses de fonctions à hydrogène actif telles que notamment le plastifiant de la farine végétale et les protéines et acides gras contenus dans la farine végétale. Il s'agit de fonctions présentant au moins un atome d'hydrogène qui est déplacé lorsqu'une réaction chimique a lieu entre l'atome porteur de cet atome d'hydrogène et une autre fonction réactive. Les fonctions à hydrogène actif sont par exemple les fonctions hydroxyle, acide protonique, urée, uréthane, amide, aminé ou thiol.

L'agent de liaison A permet par conséquent la fixation, par liaisons covalentes, d'au moins une partie de l'agent plastifiant et d'au moins une partie des acides gras et des protéines contenus dans la farine végétale. La farine végétale plastifiée ainsi obtenue possède un comportement thermoplastique.

Dans le procédé selon l'invention, il est important de respecter l'ordre d'introduction des composants étant donné qu'il s'agit de conférer à la composition résultante des propriétés rhéologiques, mécaniques et de tenue à l'eau. En effet, ces propriétés ainsi que le caractère thermoplastique de la composition nécessitent un matériau homogène. Si tous les composants étaient introduits en même temps, l'agent de liaison A pourrait réagir avec deux molécules de plastifiant ou également dans la mesure où la farine végétale contient généralement de l'eau, l'agent de liaison A pourrait réagir avec celle- ci. Ainsi, il ne permettrait pas de lier le plastifiant et les acides gras et protéines de la farine.

La masse molaire de l'agent de liaison est de préférence inférieure à 5000 g/mol et tout particulièrement inférieure à 1000 g/mol. En effet, la faible masse molaire de l'agent de liaison permet son incorporation rapide et facile dans la composition de farine végétale plastifiée par le plastifiant.

De préférence, ledit agent de liaison présente une masse molaire comprise entre 50 et 500 g/mol, en particulier entre 90 et 300 g/mol.

On entend par « polymère synthétique non biodégradable » (composant 4), tout polymère non biodégradable synthétisé à partir de monomères et/ou oligomères d'origine fossile et/ou de monomères et/ou d'oligomères issus de ressources naturelles renouvelables.

Le polymère synthétique non biodégradable est de préférence un oligomère ou un polymère organique ayant une masse molaire moyenne comprise entre 5 000 et 5 000 000 g/mol, notamment comprise entre 8500 et 3 000 000 g/mol, en particulier comprise entre 15 000 et 1 000 000 g/mol.

On entend par « agent de liaison B» (composant 5 optionnel) tout polymère non biodégradable synthétisé à partir de monomère et/ou oligomères d'origine fossile et/ou de monomères et/ou oligomères issus de ressources naturelles renouvelables, porteur de :
- fonctions à hydrogène actif, ou
- de fonctions susceptibles de donner, notamment par hydrolyse, de telles fonctions à hydrogène actif. Les fonctions qui peuvent donner de telles fonctions à hydrogène actif sont par exemple les fonctions alcoxy, en particulier les alcoxysilanes, ou les fonctions chlorure d'acyle, anhydride d'acide, époxyde ou ester, ou
- de fonctions réactives vis-à-vis-de fonctions à hydrogènes actifs.

Il s'agit en outre de polymères synthétiques non biodégradables fonctionnalisés ou greffés par des fonctions hydroxyles, acides, esters, isocyanates ou époxydes.

L'incorporation de l'agent de liaison B permet de lier physiquement et/ou chimiquement par des liaisons covalentes la farine végétale plastifiée thermoplastique au polymère synthétique (composant 4).

L'incorporation de l'agent de liaison A dans la farine végétale plastifiée et la réaction de cet agent de liaison avec la farine végétale et le plastifiant conduisant à l'obtention d'une farine végétale plastifiée thermoplastique (étape (c)) se fait de préférence par malaxage à chaud à une température comprise entre 60 et 200 °C, plus avantageusement entre 100 et 160°C.

A titre d'exemple d'agents de liaison A (composant 3) utilisables dans la présente invention, on peut citer :
- les diisocyanates, de préférence le méthylènediphényl-diisocyanate (MDI), l'isophorone-diisocyanate (IPDI), le dicyclohexylméthane-diisocyanate (H12MDI), le toluène-diisocyanate (TDI), le naphthalène-diisocyanate (NDI), l'hexaméthylène-diisocyanate (HMDI) ou la lysine-diisocyanate (LDI), le diisocyanate aliphatique de masse molaire 600 g/mol obtenu à partir de dimères de diacide gras tel que, par exemple, le DDI®1410 Diisocyanate,
- les dimères, trimères et tétramères de diisocyanates,
- les triisocyanates, tétraisocyanates ainsi que les homopolymères respectifs des di-, tri- et tétraisocyanates existants,
- les prépolymères diisocyanates dits « isocyanate-free » résultant de la réaction entre un diol ou une aminé et un diisocyanate dans des conditions telles que le prépolymère contienne une fonction isocyanate à chacune de ses extrémités (polymère α,ω-fonctionnel ou téléchélique) sans que du diisocyanate libre ne puisse être détecté,
- les prépolymères d'isocyanate de type dendrimères, préparés à partir de composés présentant plusieurs fonctions alcools ou aminés et de polyisocyanates préparés de façon à ce que le dendrimère formé ne présente que des fonctions isocyanates réactives en bout de branche, le dendrimère contenant ou non des di ou triisocyanates libres,
- les dialkylcarbonates, notamment les dialkylcarbonates de dianhydrohexitols, et en particulier les dialkylcarbonates d'isosorbide,
- les dicarbamoylcaprolactames, de préférence le 1,1 '-carbonyl-bis-caprolactame, les diépoxydes,
- les halogénhydrines comportant une fonction époxyde et une fonction halogénure, de préférence l'épichlorhydrine,
- les diacides organiques, de préférence l'acide succinique, l'acide adipique, l'acide glutarique, l'acide oxalique, l'acide malonique, l'acide maléique ou les anhydrides correspondants,
- les polyacides et les polyanhydrides, de préférence l'acide mellitique ou ses dérivés, tels que l'acide trimellitique ou l'acide pyromellitique,
- les oxychlorures, de préférence l'oxychlorure de phosphore,
- les trimétaphosphates, de préférence le trimétaphosphate de sodium,
- les alcoxysilanes, de préférence le tétraéthoxysilane,
- les composés hétérocycliques, de préférence les bis-oxazolines, les bis-oxazolin-5- ones et les bis-azalactones,
- les dérivés de diesters méthyléniques ou éthyléniques, de préférence les dérivés de carbonates de méthyle ou d'éthyle,
- les mélanges quelconques d'au moins deux quelconques des composés précités.

Dans un mode de réalisation avantageux, l'agent de liaison A est choisi dans le comprenant les diisocyanates, les diépoxydes et les halogénhydrines.

De manière particulièrement préférée, l'agent de liaison A est un diisocyanate, et en particulier le méthylènediphényl diisocyanate (MDI). Par ailleurs, l'emploi d'isophorone-diisocyanate (IPDI) ou de dicyclohexylméthane-diisocyanate (H12MDI) permet d'obtenir des compositions finales particulièrement peu colorées. On peut mettre en oeuvre un mélange quelconque d'au moins deux quelconques des trois diisocyanates précités (MDI, IPDI, H12MDI).

La quantité appropriée d'agent de liaison A (composant 3) dépend notamment de la teneur en agent plastifiant (composant 2). Il a été noté que plus la quantité de plastifiant introduite est élevée, plus la quantité d'agent de liaison A peut être augmentée sans que la matière finale ne devienne dure et perde ses propriétés thermoplastiques.

La quantité d'agent de liaison A ajouté représente de 0,1 à 20 % en poids sec d'agent de liaison A par rapport au poids sec total de la composition thermoplastique. De manière plus spécifique, la quantité d'agent de liaison A représente de 0.5 à 15 % en poids sec d'agent de liaison A par rapport au poids sec total de la composition thermoplastique, de préférence de 0.8 à 10 %, encore plus préférentiellement de 0.9 à 5 %.

Grâce à l'agent de liaison A, la sensibilité à l'eau et à la vapeur d'eau des compositions thermoplastiques finales obtenues selon l'invention est fortement réduite. De ce fait, le refroidissement rapide en fin de fabrication par immersion dans l'eau est possible.

L'agent plastifiant de la farine végétale (composant 2) est de préférence choisi dans le groupe comprenant les diols ; les triols ; les polyols tels que le 1,3-propanediol synthétique ou biosourcé, le glycérol, le polyglycérol, l'isosorbide, les sorbitans, le sorbitol, le mannitol, et les sirops de glucose hydrogénés ; les sels d'acides organiques comme le lactate de sodium ; l'urée et les mélanges de ces composés. Le plastifiant présente de façon avantageuse une masse molaire inférieure à 5000 g/mol, de préférence inférieure à 1000 g/mol, et en particulier inférieur à 400 g/mol. L'agent plastifiant organique a bien entendu une masse molaire supérieure à 18 g/mol, autrement dit il n'englobe pas l'eau.

Grâce à la présence de l'agent de liaison A, la quantité d'agent plastifiant (composant 2) utilisée dans la présente invention peut être, de manière avantageuse relativement élevée. L'agent plastifiant est incorporé dans la farine végétale à raison de 10 à 150 parts en poids pour 100 parts en poids sec d'amidon contenu dans la farine végétale, de préférence à raison de 25 à 120 parts en poids et en particulier à raison de 40 à 120 parts en poids.

Le polymère synthétique non biodégradable utilisé dans le cadre de l'invention est un polymère synthétisé à partir de monomères et/ou d'oligomères d'origine fossile et/ou de monomères et/ou d'oligomères issus de ressources naturelles renouvelables.

Le polymère synthétique obtenu à partir de monomères et/ou d'oligomères d'origine fossile, peut être choisi parmi les polymères synthétiques de type polyoléfine, polyester, polycarbonate, polyamide, polyuréthane, polyacrylique, polyacétal, polyimide, styrénique, vinylique, fluoré, polysulfone, polyphényléther, polyphénylsulfure, silicone et polyéther.

A titre d'exemple, on peut citer les PLA, les PBS, les PBSA, les PBAT, les PET, les polyamides (PA) 6, 6-6, 6-10, 6-12, 1 1 et 12, les copolyamides, les polyacrylates, le poly(alcool de vinyle), les poly(acétate de vinyle), les copolymères éthylène-acétate de vinyle (EVA), les copolymères éthylène-acrylate de méthyle (EMA) et éthylène-acrylate de butyle (EBA), les copolymères éthylène-alcool vinylique (EVOH), les polyoxyméthylènes (POM), les copolymères acrylonitrile-styrène-acrylates (ASA), les polyuréthanes thermoplastiques (TPU), les polyéthylènes ou polypropylènes, les copolymères styrène-butylène-styrènes (SBS) et styrène-éthylène-butylène-styrènes (SEBS) et les mélanges quelconques de ces polymères.

Le polymère synthétique non biodégradable peut être en outre un polymère synthétisé à partir de monomères et/ou oligomères issus de ressources naturelles renouvelables à brève échéance comme les plantes, les microorganismes ou les gaz, notamment à partir de sucres, de glycérine, d'huiles ou de leurs dérivés tels que des alcools ou des acides, mono-, di- ou polyfonctionnels, et en particulier à partir de molécules telles que le bio- éthanol, le bio-éthylèneglycol, le bio-propanediol, le 1 ,3-propanediol biosourcé, le bio- butane-diol, l'acide lactique, l'acide succinique biosourcé, le glycérol, l'isosorbide, le sorbitol, le saccharose, les diols dérivés d'huiles végétales ou animales et les acides résiniques extraits de pin.

Il peut être notamment du polyéthylène issu de bio-éthanol, du polypropylène issu de bio-propanediol, des polyesters de type PLA ou PBS à base d'acide lactique ou d'acide succinique biosourcés, des polyesters de type PB AT à base de butane-diol ou d'acide succinique biosourcés, de polyesters de type SORONA® à base de 1 ,3-propanediol biosourcé, des polycarbonates contenant de l'isosorbide, de polyéthylèneglycols à base bio-éthylèneglycol, des polyamides à base d'huile de ricin ou de polyols végétaux, et des polyuréthanes à base par exemple, de diols végétaux, de glycérol, d'isosorbide, de sorbitol ou de saccharose.

De préférence, le polymère synthétique non biodégradable (composant 4) est choisi dans le groupe comprenant les copolymères éthylène-acétate de vinyle (EVA), les copolymères éthylène-acrylate de butyle (EBA), les polyéthylènes (PE), polypropylènes (PP), les polyuréthanes thermoplastiques (TPU), les poly(butylène succinate) (PBS), les poly(butylène succinate-co-adipate) (PBSA), les poly(butylène adipate téréphtalate) (PBAT), les copolymères styrène-butylène-styrène, et styrène-éthylène-butylène-styrène (SEBS) les poly(éthylène téréphtalate) amorphes (PETG), les polymères synthétiques obtenus à partir de monomères bio-sourcés, et les mélanges de ceux-ci.

On peut citer à titre d'exemples de polymères synthétiques non biodégradables particulièrement préférés les polyéthylènes (PE) et polypropylènes (PP), les copolymères styrène-éthylène-butylène-styrène (SEBS), les poly(éthylène téréphtalate) amorphes (PETG) et les polyuréthanes thermoplastiques (TPU).

Avantageusement, le polymère synthétique non biodégradable présente une masse molaire moyenne comprise entre 8500 et 10 000 000 g/mol, en particulier entre 15 000 et 1 000 000 g/mol.

Par ailleurs, le polymère synthétique non biodégradable est constitué de préférence de carbone d'origine renouvelable au sens de la norme ASTM D6852 et est avantageusement non biodégradable ou non compostable au sens des normes EN 13432, ASTM D6400 et ASTM 6868.

Comme déjà indiqué, l'agent de liaison B (composant 5 optionnel) est un polymère non biodégradable synthétisé à partir de monomères et/ou oligomères d'origine fossile et/ou de monomères et/ou oligomères issus de ressources naturelles renouvelables, porteur :
- de fonctions à hydrogène actif, ou
- de fonctions susceptibles de donner, notamment par hydrolyse, de telles fonctions à hydrogène actif. Les fonctions qui peuvent donner de telles fonctions à hydrogène actif sont par exemple les fonctions alcoxy, en particulier les alcoxysilanes, ou les fonctions chlorure d'acyle, anhydride d'acide, époxyde ou ester, ou
- de fonctions réactives vis-de fonctions à hydrogènes actifs.

L'agent de liaison B (composant 5) choisi parmi les polymères non biodégradables synthétisés à partir de monomères et/ou oligomères d'origine fossile peut être un polymère polaire choisi parmi les polymères synthétiques de type polyester, polyacrylique, polycarbonate, polyamide, polyimide, polyuréthane et polyacétal.

A titre d'exemple, on peut citer les PLA, les PBS, les PBSA, les PBAT, les PET, les polyamides (PA) 6, 6-6, 6-10, 6-12, 11 et 12, les copolyamides, le poly(alcool de vinyle), les polyoxyméthylènes (POM), les copolymères acrylonitrile-styrène-acrylates (ASA), les polyuréthanes thermoplastiques (TPU),

Il peut également être choisi parmi les polymères synthétiques fonctionnalisés ou greffés par exemple par des motifs silane, acryliques ou anhydride maléique, hydroxyles, époxydes ou isocyanates. Ces polymères fonctionnalisés sont de type polyoléfme fonctionnalisée, styrénique fonctionnalisé, vinylique fonctionnalisé, fluoré fonctionnalisé.

Ces polymères synthétiques fonctionnalisés ou greffés peuvent être choisis dans le groupe comprenant les composés suivants :
- les homopolymères d'oléfines fonctionnalisés ou greffés, par exemple par des acides ou des anhydrides tels que les acides (ou anhydrides) maléique, acrylique et méthacrylique, comme, par exemple, les polyéthylènes et polypropylènes greffés anhydride maléique, par des oxiranes tels que le méthacrylate ou l'acrylate de glycidyle, par des silanes, par des isocyanates tel que le 1-(1(isocyanato-1-methylethyl)-3-(1-methylethenyl) benzène,
- les copolymères à base d'au moins deux oléfines comme, par exemple, les copolymères d'éthylène - propylène (P/E) fonctionnalisés ou greffés, par exemple par des acides ou des anhydrides tels que les acides (ou anhydrides) maléique, acrylique et méthacrylique, comme, par exemple, les polyéthylènes et polypropylènes greffés anhydride maléique, par des oxiranes tels que le méthacrylate ou l'acrylate de glycidyle, par des silanes, par de isocyanates tel que le 1-(1(isocyanato-1-methylethyl)-3-(1-methylethenyl) benzène,
- les copolymères à base d'au moins une oléfine et d'au moins un monomère non oléfinique comme, par exemple, les copolymères d'éthylène - ester acrylique ou les copolymères d'éthylène - vinyl ester tels que les copolymères éthylène - acétate de vinyle (EVA), éthylène - acrylate de méthyle (EMA), éthylène - acrylate de butyle (EBA) ou éthylène - alcool vinylique (EVOH),
- les terpolymères d'éthylène - ester acrylique - anhydride maléique ou ester de glycidyle en particulier glycidyl methacrilate,
- les copolymères de styrène - ester acrylique - anhydride maléique ou glycidyl methacrilate,
- les copolymères styrène-butylène-styrènes (SBS) et styrène-éthylène-butylène-styrènes (SEBS) fonctionnalisés par exemple par des motifs anhydride maléique.
- les mélanges quelconques d'au moins deux quelconques des composés précités.

L'agent de liaison B (composant 5) peut être également un polymère synthétisé à partir de monomères et/ou oligomères issus de ressources naturelles renouvelables à brève échéance comme les plantes, les microorganismes ou les gaz, notamment à partir de sucres, de glycérine, d'huiles ou de leurs dérivés tels que des alcools ou des acides, mono-, di- ou polyfonctionnels, et en particulier à partir de molécules telles que le bio- éthanol, le bio-éthylèneglycol, le bio-propanediol, le 1,3-propanediol biosourcé, le bio- butane-diol, l'acide lactique, l'acide succinique biosourcé, le glycérol, l'isosorbide, le sorbitol, le saccharose, les diols dérivés d'huiles végétales ou animales et les acides résiniques extraits de pin.

Il peut être notamment du polyéthylène issu de bio-éthanol ou du polypropylène issu de bio-propanediol , greffés par des motifs anhydride maléique, des motifs oxirane tels que le méthacrylate ou l'acrylate de glycidyle, des motifs silane, ou des motifs isocyanate tels que le 1-(1(isocyanato-1-methylethyl)-3-(1-methylethenyl) benzène.

Il peut également être choisi parmi les polyesters de type PLA ou PBS à base d'acide lactique ou d'acide succinique biosourcés, des polyesters de type PB AT à base de butane-diol ou d'acide succinique biosourcés, de polyesters de type SORONA® à base de 1,3-propanediol biosourcé, des polycarbonates contenant de l'isosorbide, de polyéthylèneglycols à base bio-éthylèneglycol, des polyamides à base d'huile de ricin ou de polyols végétaux, et des polyuréthanes à base par exemple, de diols végétaux, de glycérol, d'isosorbide, de sorbitol ou de saccharose.

De préférence, l'agent de liaison B est choisi parmi les copolymères éthylène-acétate de vinyle (EVA), les copolymères éthylène-acrylate de butyle (EBA) les polyéthylènes (PE) et polypropylènes (PP) fonctionnalisés, notamment par des motifs silane, des motifs acryliques ou des motifs anhydride maléique, les polyuréthanes thermoplastiques (TPU), les poly(butylène succinate) (PBS), les poly(butylène succinate-co-adipate) (PBSA), les poly(butylène adipate téréphtalate) (PBAT), les copolymères styrène- butylène-styrène, et styrène-éthylène-butylène-styrène (SEBS), de préférence fonctionnalisés, notamment par des motifs anhydride maléique, les poly(éthylène téréphtalate) amorphes (PETG), les polymères synthétiques obtenus à partir de monomères bio-sourcés, les polymères extraits de plantes, de tissus animaux et de microorganismes, éventuellement fonctionnalisés, et les mélanges de ceux-ci.

On peut citer à titre d'exemples d'agent de liaison B particulièrement préférés les polymères synthétiques non biodégradables fonctionnalisés ou greffés choisis dans le groupe comprenant les polyéthylènes (PE) et polypropylènes (PP) fonctionnalisés, les copolymères styrène-éthylène-styrène (SEBS) et styrène-éthylène-butylène-styrène (SEBS) fonctionnalisés, les copolymères et terpolymères à base d'éthylène et de motifs ester acrylique, vinyl ester, anhydride maléique et/ou ester de glycidyle, les copolymères de styrène - ester acrylique - anhydride maléique ou glycidyl methacrilate et les polyuréthanes thermoplastiques (TPU).

Avantageusement, l'agent de liaison B présente une masse molaire moyenne comprise entre 8500 et 10 000 000 g/mol, en particulier entre 15 000 et 1 000 000 g/mol.

Par ailleurs, l'agent de liaison B (composant 5) est constitué de préférence de carbone d'origine renouvelable au sens de la norme ASTM D6852 et est avantageusement non biodégradable ou non compostable au sens des normes EN 13432, ASTM D6400 et ASTM 6868.

La quantité de polymère synthétique non biodégradable, contenant éventuellement l'agent de liaison B, mélangé à la farine végétale plastifiée thermoplastique obtenue à l'étape (c) peut représenter de 10 à 80 % en poids sec par rapport au poids sec total de la composition. De manière plus spécifique, la quantité de polymère synthétique, contenant éventuellement l'agent de liaison B, représente de 20 à 70 %, de préférence de 30 à 60 %, encore plus préférentiellement de 40 à 50 % en poids sec par rapport au poids total de la composition.

L'étape (d) d'incorporation et de dispersion fine de la farine végétale plastifiée thermoplastique, obtenue à l'issu de l'étape (c), dans le polymère synthétique contenant éventuellement l'agent de liaison B se fait de préférence par malaxage à chaud à une température comprise entre 60 et 200 °C, et plus avantageusement entre 100 et 160°C.

La liaison des différents ingrédients entre eux confère aux compositions thermoplastiques les propriétés mécaniques et rhéologiques avantageusement améliorées.

Dans un mode de réalisation préféré du procédé de l'invention, la farine végétale plastifiée de l'étape (b), est séchée ou déshydratée, avant l'incorporation de l'agent de liaison A (composant 3) à l'étape (c), jusqu'à un taux d'humidité résiduelle inférieur à 5 %, de préférence inférieur à 1 %, et en particulier inférieur à 0,1 %.

En fonction de la quantité d'eau à éliminer, cette étape de séchage ou de déshydratation peut être conduite par lots (batch) ou en continu au cours du procédé.

De préférence, le mélange thermomécanique de la farine végétale et du plastifiant dans l'étape (b) est réalisé par malaxage à chaud à une température de préférence comprise entre 60 et 200 °C, plus préférentiellement entre 100 et 160 °C, de façon discontinue, par exemple par pétrissage/malaxage, ou de façon continue par exemple par extrusion. La durée de ce mélange peut être de quelques secondes à quelques heures, selon le mode de mélange retenu.

L'incorporation, lors de l'étape (c), de l'agent de liaison A dans la farine plastifiée peut être réalisée par mélange thermomécanique, de façon discontinue ou de façon continue et en particulier en ligne, par extrusion réactive. Dans ce cas, la durée de mélange peut être courte, de quelques secondes à quelques minutes.

De façon similaire, l'incorporation et la dispersion lors de l'étape (d), de la farine plastifiée thermoplastique dans le polymère synthétique contenant éventuellement l'agent de liaison B peut être réalisée par mélange thermomécanique, de façon discontinue ou de façon continue et en particulier en ligne, par extrusion réactive. Dans ce cas, la durée de mélange peut être courte, de quelques secondes à quelques minutes.

Dans un mode de réalisation particulier, l'étape (b) de plastification de la farine végétale, le séchage de la composition plastifiée obtenue et l'étape (c) d'incorporation de l'agent de liaison A et de réaction de ce dit agent de liaison avec le plastifiant et les constituants de la farine végétale, sont réalisées successivement dans deux réacteurs différents ou au sein d'un même réacteur, de façon discontinue ou de façon continue et en particulier en ligne, par extrusion réactive.

Dans un autre mode de réalisation particulier, l'étape (b) de plastification de la farine végétale, le séchage de la composition plastifiée obtenue, l'étape (c) d'incorporation de l'agent de liaison A et de réaction de ce dit agent de liaison avec le plastifiant et les constituants de la farine végétale, et l'étape (d) d'incorporation et de dispersion fine de la composition plastifiée thermoplastique dans un polymère synthétique non biodégradable contenant éventuellement un agent de liaison B, sont réalisées successivement dans deux réacteurs différents ou au sein d'un même réacteur, de façon discontinue ou de façon continue et en particulier en ligne, par extrusion réactive.

La présente invention divulgue également une composition thermoplastique à base de farine végétale susceptible d'être obtenue par le procédé de l'invention.

La composition est thermoplastique au sens défini plus haut et présente de ce fait avantageusement, une viscosité complexe, mesurée sur rhéomètre de type PHYSICA MCR 501 ou équivalent, comprise entre 10 et 10⁶ Pa.s, pour une température comprise entre 100 et 200°C. Pour des usages en injection par exemple, sa viscosité à ces températures peut être plutôt faible et la composition est alors préférentiellement thermo-fusible au sens précisé plus haut.

Cette composition est soit un simple mélange des quatre ou cinq composants (farine végétale, plastifiant, agent de liaison A, polymère synthétique non biodégradable et agent de liaison B optionnel), soit un mélange comprenant des produits macromoléculaires résultant de la réaction des agents de liaison avec chacun des deux ou trois autres composants. Autrement dit la présente invention divulgue non seulement la composition obtenue à l'issue de l'étape (d), mais également celle obtenue à l'issue de l'étape (c), c'est-à-dire avant mélange, dispersion et compatibilisation de la farine végétale plastifiée obtenue à l'issue de l'étape (c) dans le polymère synthétique non biodégradable contenant éventuellement l'agent de liaison B à l'étape (d).

Bien entendu, les propriétés intéressantes des compositions thermoplastiques de la présente divulgation sont celles des compositions issues de l'étape (d).

Les compositions présentent de préférence une structure de type « dispersion solide ». Autrement dit, les compositions contiennent la farine végétale plastifiée sous forme de domaines dispersés dans une matrice de polymère synthétique non biodégradable continue. Cette structure de type dispersion doit être distinguée en particulier d'une structure où la farine plastifiée et le polymère synthétique non biodégradable ne constitueraient qu'une seule et même phase, ou encore des compositions contenant deux réseaux co-continus de farine végétale plastifiée et de polymère synthétique non biodégradable. Le but de la présente divulgation n'est pas en effet de préparer des matériaux avant tout biodégradables, mais des matières plastiques à forte teneur en farine végétale ayant d'excellentes propriétés rhéologiques et mécaniques.

Pour cette même raison, on choisit de préférence le polymère synthétique parmi les polymères synthétiques non biodégradables au sens des normes EN 13432, ASTM D6400 et ASTM 6868.

Les compositions thermoplastiques présentent l'avantage d'être peu solubles voire même totalement insolubles dans l'eau. Elles sont difficilement hydratées et conservent une bonne intégrité physique après immersion dans l'eau. Leur taux d'insolubles dans l'eau, à 23 °C, est de préférence supérieur à 72 %, en particulier supérieur à 80 % et encore plus particulièrement supérieur à 90 %. De manière très avantageuse, il peut être supérieur à 92 %, notamment supérieur à 95 %. Idéalement, ce taux d'insolubles peut être au moins égal à 98 % et notamment être proche de 100%.

Par ailleurs, le taux de gonflement des compositions thermoplastiques, après immersion dans l'eau à 23 °C pendant une durée de 24 heures, est de préférence inférieur à 20 %, en particulier inférieur à 12 %, et encore plus particulièrement inférieur à 6 %. De manière très avantageuse, il peut être inférieur à 5 %, notamment inférieur à 3 %. Idéalement, ce taux de gonflement est au plus égal à 2 % et peut notamment être proche de 0%.

Les compositions thermoplastiques présentent avantageusement des courbes contrainte/déformation caractéristiques d'un matériau ductile, et non pas d'un matériau de type fragile. L'allongement à la rupture, mesuré pour les compositions de la présente divulgation, est supérieur à 10 %, de préférence supérieur à 40 %, et encore plus préférentiellement supérieur à 80 %. Cet allongement à la rupture peut avantageusement être au moins égal à 90 %, notamment au moins égal à 120 %. Il peut même atteindre ou dépasser 180 %, voire 250 %. Il est en général raisonnablement inférieur à 500 %.

La contrainte seuil d'élasticité des compositions thermoplastiques de la présente divulgation est généralement supérieure à 4 MPa, de préférence supérieure à 6 MPa, mieux encore supérieure à 8 MPa. Elle peut même atteindre ou dépasser 10 MPa, voire 20 MPa. Elle est en général raisonnablement inférieure à 80 MPa.

Le module de flexion à la rupture des compositions thermoplastiques de la présente divulgation est généralement supérieur à 100 MPa, de préférence supérieur à 300 MPa, encore plus préférentiellement supérieur à 800 MPa. Elle peut même atteindre ou dépasser 1100 MPa, voire 1600 MPa. Il est en général raisonnablement inférieur à 3000 MPa.

Par rapport aux matériaux à hautes teneurs en amidon thermoplastique de l'art antérieur, les matériaux obtenus selon l'invention à partir de farine végétale plastifiée thermoplastique présentent avantageusement des performances mécaniques et rhéologiques améliorées.

Elles présentent en outre
- une contrainte seuil d'élasticité supérieure,
- un allongement à la rupture supérieur,
- un module de flexion supérieur,
- une meilleure processabilité avec notamment une viscosité à l'état fondu plus faible,
- une résistance au choc équivalente voire supérieure.

De manière tout à fait remarquable, la composition thermoplastique à base de farine végétale peut, en particulier, présenter simultanément :
- un taux d'insolubles au moins égal à 90 %,
- un taux de gonflement inférieur à 12 %,
- un allongement à la rupture au moins égal à 10 %,
- une contrainte maximale à la rupture supérieure à 4 MPa, et
- un module de flexion au moins égal à 100MPa,

De manière encore plus remarquable, la composition thermoplastique à base de farine végétale peut présenter les propriétés suivantes simultanément :
- un taux d'insolubles au moins égal à 99 %,
- un taux de gonflement inférieur à 5 %,
- un allongement à la rupture au moins égal à 100 %,
- une contrainte seuil d'élasticité supérieure à 15 MPa, et
- un module de flexion au moins égal à 850 MPa.

La composition peut également comprendre différents autres composés additionnels. Il peut s'agir de composés visant à améliorer ses propriétés physico-chimiques, en particulier son comportement de mise en oeuvre et sa durabilité ou bien ses propriétés mécaniques, thermiques, conductrices, adhésives ou organoleptiques.

Le composé additionnel peut être un agent améliorateur ou d'ajustement des propriétés mécaniques ou thermiques choisi dans le groupe comprenant les minéraux, les sels et les substances organiques, en particulier parmi les agents de nucléation comme le talc, les agents compatibilisants comme les agents tensio-actifs, les agents améliorateurs de la résistance aux chocs ou aux rayures comme le silicate de calcium, les agents régulateurs de retrait comme le silicate de magnésium, les agents piégeurs ou désactivateurs d'eau, d'acides, de catalyseurs, de métaux, d'oxygène, de rayons infra-rouges, de rayons UV, les agents hydrophobants comme les huiles et graisses, les agents hygroscopiques comme le pentaérythritol, les agents retardateurs de flamme et les agents anti-feu comme les dérivés halogénés, les agents anti-fumée, les charges de renforcement, minérales ou organiques, comme les argiles, le noir de carbone, le talc, les fibres végétales, les fibres de verre ou le kevlar.

Le composé additionnel peut être également un agent améliorateur ou d'ajustement des propriétés conductrices ou isolantes vis-à-vis de l'électricité ou de la chaleur, de l'étanchéité par exemple à l'air, à l'eau, aux gaz, aux solvants, aux corps gras, aux essences, aux arômes, aux parfums, choisi notamment parmi les minéraux, les sels et les substances organiques, en particulier parmi les agents de nucléation comme le talc, les agents compatibilisants comme les agents tensio-actifs, les agents piégeurs ou désactivateurs d'eau, d'acides, de catalyseurs, de métaux, d'oxygène ou du rayonnement infra-rouge, les agents hydrophobants comme les huiles et graisses, les agents perlants, les agents hygroscopiques comme le pentaérythritol, les agents de conduction ou de dissipation de la chaleur comme les poudres métalliques, les graphites et les sels, et les charges de renforcement micrométriques comme les argiles et le noir de carbone.

Le composé additionnel peut être encore un agent améliorateur des propriétés organoleptiques, notamment :
- des propriétés odorantes (parfums ou agents de masquage d'odeur),
- des propriétés optiques (agents de brillance, agents de blancheur tels que le dioxyde de titane, colorants, pigments, exhausteurs de colorants, opacifiants, agents de matité tels que le carbonate de calcium, agents thermochromes, agents de phosporescence et de fluorescence, agents métallisants ou marbrants et agents antibuée),
- des propriétés sonores (sulfate de baryum et barytes), et
- des propriétés tactiles (matières grasses).

Le composé additionnel peut être aussi un agent améliorateur ou d'ajustement des propriétés adhésives, notamment de l'adhésion vis-à-vis des matières cellulosiques comme le papier ou le bois, des matières métalliques comme l'aluminium et l'acier, des matériaux en verre ou céramiques, des matières textiles et des matières minérales, comme notamment les résines de pin, le colophane, les copolymères d'éthylène/alcool vinylique, les aminés grasses, les agents lubrifiants, les agents de démoulage, les agents antistatiques et les agents anti-blocking.

Enfin, le composé additionnel peut être un agent améliorateur de la durabilité du matériau ou un agent de contrôle de sa (bio)dégradabilité, notamment choisi parmi les agents hydrophobants comme les huiles et graisses, les agents anticorrosion, les agents antimicrobiens comme Ag, Cu et Zn, les catalyseurs de dégradation comme les oxo- catalyseurs et les enzymes comme les amylases.

La composition thermoplastique non biodégradable présente en outre l'avantage d'être constituée de matières premières essentiellement renouvelables et de pouvoir présenter, après ajustement de la formulation, les propriétés suivantes, utiles dans de multiples applications en plasturgie ou dans d'autres domaines :
- thermoplasticité, viscosité à l'état fondu et température de transition vitreuse appropriées, dans les gammes de valeur habituelles connues des polymères courants (Tg de -50° à 150°C), permettant une mise en oeuvre grâce aux installations industrielles existantes et utilisées classiquement pour les polymères synthétiques habituels,
- une miscibilité suffisante à une grande variété de polymères d'origine fossile ou d'origine renouvelable du marché ou en développement,
- une stabilité physicochimique satisfaisante aux conditions de mise en oeuvre,
- faible sensibilité à l'eau et à la vapeur d'eau,
- performances mécaniques très améliorées par rapport aux compositions thermoplastiques d'amidon de l'art antérieur (souplesse, allongement à la rupture, contrainte maximale à la rupture)
- bon effet de barrière à l'eau, à la vapeur d'eau, à l'oxygène, au gaz carbonique, aux UV, aux corps gras, aux arômes, aux essences, aux carburants,
- opacité, translucidité ou transparence modulables en fonction des usages,
- bonne imprimabilité et aptitude à être mise en peinture, notamment par des encres et peintures en phase aqueuse,
- retrait contrôlable,
- stabilité dans le temps suffisante
- biodégradabilité, compostabilité et/ou recyclabilité ajustables.

Typiquement, la composition thermoplastique non biodégradable à base de farine végétale est non biodégradable ou non compostable au sens des normes EN 13432, ASTM D6400 et ASTM 6868.

La composition non biodégradable contient avantageusement au moins 33 %, de préférence au moins 50 %, en particulier au moins 60 %, mieux encore au moins 70 %, voir plus de 80 % de carbone d'origine renouvelable au sens de la norme ASTM D6852. Ce carbone d'origine renouvelable est essentiellement celui constitutif de la farine végétale nécessairement présente dans la composition conforme à la divulgation mais peut être aussi avantageusement, par un choix judicieux des constituants de la composition, celui présent dans le plastifiant de la farine végétale comme dans le cas par exemple du glycérol ou du sorbitol, mais encore de celui présent dans le polymère synthétique et éventuellement l'agent de liaison B, tout autre composé fonctionnel ou tout polymère additionnel lorsqu'ils proviennent de ressources naturelles renouvelables comme ceux définis préférentiellement ci-dessus.

Les exemples ci-après sont fournis à titre illustratif, et non limitatif, de la présente invention.

### EXEMPLES DE REALISATION

### Description des tests de caractérisation :

### Taux de gonflement et taux d'insolubles

On détermine le taux d'insolubles dans l'eau selon le protocole suivant :
(i) Sécher l'échantillon de composition à caractériser (12 heures environ à 80°C sous vide).
(ii) Mesurer la masse de l'échantillon (= Msl) avec une balance de précision.
(iii) Immerger l'échantillon dans l'eau, à 20°C (volume d'eau en mL égal à 100 fois la masse en g d'échantillon).
(iv) Prélever l'échantillon après un temps défini de plusieurs heures.
(v) Eliminer l'excès d'eau en surface avec un papier absorbant, le plus rapidement possible.
(vi) Poser l'échantillon sur une balance de précision et suivre la perte de masse pendant 2 minutes (mesure de la masse toutes les 20 secondes).
(vii) Déterminer la masse de l'échantillon gonflé par représentation graphique des prises de mesure précédentes en fonction du temps et extrapolation à t=0 de la masse (= Mg).
(viii) Sécher l'échantillon (pendant 24 heures à 80°C sous vide). Mesurer la masse de l'échantillon sec (= Ms2).
(ix) Calculer le taux d'insolubles, exprimé en pour-cents, suivant la formule Ms2/Msl .
(x) Calculer le taux de gonflement, en pour-cents, selon la formule (Mg-Msl)/Msl.

### Test de traction

On détermine les caractéristiques mécaniques en traction des différents échantillons selon la norme NF T51-034 (Détermination des propriétés en traction) en utilisant un banc d'essai Lloyd Instrument LR5K, une vitesse de traction : 50 mm/min et des éprouvettes normalisées de type H2.

### Test de flexion

La mesure du module de flexion est réalisée selon la norme ISO 178.

### Indice de fluidité à l'état fondu (MVR)

On détermine l'indice de fluidité en volume à 190°C/10kg des différents échantillons en utilisant un gradeur Kayeness 4001 Dynasco.

### Préparation des compositions thermoplastiques suivant l'art antérieur à base d'amidon

Dans les exemples 1 et 2, un amidon de blé standard commercialisé par la société Roquette sous le nom « Amidon de blé SP» présentant une teneur en eau voisine de 12% est plastifié par une composition aqueuse concentrée de polyols à base de glycérol et de sorbitol, commercialisée également par la société Roquette sous l'appellation POLYSORB G84/41/00 ayant une teneur en eau de 16% environ.

La plastification est réalisée en extrudeuse bi-vis de diamètre 26 et de rapport (longueur de vis / diamètre de vis égal à 50).

Les conditions d'extrusion sont les suivantes :
- Profil de température (dix zones de chauffe ZI à Z10) :
   90/90/110/140/140/110/90/90/90/90
- Vitesse de vis : 200 tr/min.

En sortie de l'extrudeuse, l'amidon plastifié est refroidi dans l'air, séché à 80°C en étuve sous vide pendant 24 heures puis broyé.

L'amidon plastifié de l'exemple 1 (AP7030) est obtenu en mélangeant dans l'extrudeuse 70% d'amidon de blé et 30% de plastifiant.

L'amidon plastifié de l'exemple 2 (AP8020) est obtenu en mélangeant dans l'extrudeuse 80%) d'amidon de blé et 20% de plastifiant.

Les granulés d'amidon plastifié séché sont ensuite extrudés une deuxième fois avec 2% de méthylène-diphényl-diisocyante (MDI) commercialisé sous la dénomination Suprasec 1400 par la société Hunstman.

Les conditions d'extrusion sont les suivantes :
- Profil de température (dix zones de chauffe ZI à Z10) : 90/90/110/110/110/110/90/90/90/90
- Vitesse de vis : 200 tr/min.

En sortie de l'extrudeuse, l'amidon plastifié modifié est refroidi dans l'air, séché à 80°C en étuve pendant 4 heures puis broyé.

Les granulés d'amidon plastifié modifié séché sont ensuite extrudés une troisième fois avec un mélange constitué d'un polypropylène A (PP (A)) et d'un polypropylène greffé Anhydride maléique B (PPgAM (B)).

Les conditions d'extrusion sont les suivantes :
- Profil de température (dix zones de chauffe ZI à Z10) : 90/90/110/130/160/160/180/180/180/180
- Vitesse de vis : 200 tr/min.

En sortie de l'extrudeuse, la composition à base d'amidon plastifié est refroidie dans l'eau, granulée en ligne et séchée à 80° C en étuve pendant 4 heures.

Les granulés des deux compositions à base d'amidon plastifié ainsi obtenues sont moulés par injection afin de réaliser les éprouvettes nécessaires pour la réalisation des essais de caractérisation en traction, flexion et choc.

### Préparation des compositions thermoplastiques suivant l'invention à base de farine végétale)

Dans les exemples 3 et 4, une farine de blé Type 55 présentant une teneur en eau voisine de 15% est plastifiée par le plastifiant POLYSORB G84/41/00.

La plastification est réalisée en extrudeuse bi-vis de diamètre 26 et de rapport (longueur de vis / diamètre de vis égal à 50).

Les conditions d'extrusion sont les suivantes :
- Profil de température (dix zones de chauffe ZI à Z10) : 90/90/110/140/140/110/90/90/90/90
- Vitesse de vis : 200 tr/min.

En sortie de l'extrudeuse, la farine végétale plastifiée est refroidie dans l'air, séchée à 80°C en étuve sous vide pendant 24 heures puis broyée.

La farine végétale plastifiée de l'exemple 3 (FP7030) est obtenue en mélangeant dans l'extrudeuse 70% de farine de blé type 55 et 30% de plastifiant.

La farine végétale plastifiée de l'exemple 4 (FP8020) est obtenue en mélangeant dans l'extrudeuse 80% de farine de blé type 55 et 20% de plastifiant.

Les granulés de farine plastifiée séchée sont ensuite extrudés une deuxième fois avec 2% de méthylène-diphényl-diisocyanate (MDI) commercialisé sous la dénomination Suprasec 1400 par la société Hunstman.

Les conditions d'extrusion sont les suivantes :
- Profil de température (dix zones de chauffe ZI à Z10) : 90/90/110/110/110/110/90/90/90/90
- Vitesse de vis : 200 tr/min.

En sortie de l'extrudeuse, la farine plastifiée modifiée est refroidie dans l'air, séchée à 80°C en étuve pendant 4 heures puis broyée.

Les granulés de farine plastifiée modifiée séchée sont ensuite extrudés une troisième fois avec un mélange constitué d'un polypropylène A (PP (A)) et d'un polypropylène greffé Anhydride maléique B (PPgAM (B)).

Les conditions d'extrusion sont les suivantes :
- Profil de température (dix zones de chauffe ZI à Z10) : 90/90/110/130/160/160/180/180/180/180
- Vitesse de vis : 200 tr/min.

En sortie de l'extrudeuse, la composition à base de farine végétale plastifiée est refroidie dans l'eau, granulée en ligne et séchée à 80° C en étuve pendant 4 heures.

Les granulés des deux compositions à base de farine végétale plastifiée ainsi obtenues sont moulés par injection afin de réaliser les éprouvettes nécessaires pour la réalisation des essais de caractérisation en traction, flexion et choc.

### Formules des compositions thermoplastiques suivant l'art antérieur (à base d'amidon de blé) et suivant l'invention (à base de farine végétale)

Les teneurs des constituants des compositions suivant l'art antérieur et suivant l'invention sont données dans le tableau II.

Les pourcentages sont exprimés en poids sec par rapport au poids sec total de la composition.

**Tableau II : Exemples de compositions à base d'amidon plastifié et de compositions thermoplastiques à base de farine plastifiée.**

| Exemple | Mélange PP (A)/ PPgAM (B) | AP7030 | AP8020 | FP7030 | FP8020 | MDI |
|---|---|---|---|---|---|---|
| 1 | 49 | 50 | - | - | - | 1 |
| 2 | 49 | - | 50 | - | - | 1 |
| 3 | 49 | - | - | 50 | - | 1 |
| 4 | 49 | - | - | - | 50 | 1 |

### Propriétés des compositions thermoplastiques suivant l'art antérieur (à base d'amidon de blé) et suivant l'invention (à base de farine végétale)

Les propriétés rhéologiques (MVR), mécaniques (Contrainte seuil d'élasticité σₛₑᵤᵢₗ, Allongement à la rupture εᵣᵤₚₜᵤᵣₑ, Module de flexion Mf) et la tenue à l'eau (Taux de gonflement T^{g} et Taux d'insolubles Tⁱ sont données dans le tableau III.

**Tableau III**

| Exemple | σₛₑᵤᵢₗ | εᵣᵤₚₜᵤᵣₑ | Mf | MVR | T^{g} | Tⁱ |
|---|---|---|---|---|---|---|
| | (MPa) | (%) | (MPa) | (cm³/10 min) | (%) | (%) |
| 1 | 17 | 180 | 600 | 20 | 8.8 | 99.7 |
| 2 | 16 | 23 | 800 | 18 | 7.8 | 99.9 |
| 3 | 23 | 200 | 850 | 44 | 1.4 | 99.9 |
| 4 | 25 | 32 | 950 | 36 | 1.7 | 99.9 |

La comparaison des performances obtenues à taux de plastification égal (Exemple 1 à comparer avec exemple 3 et exemple 2 à comparer avec exemple 4) pour les compositions, synthétisées dans les mêmes conditions, à partir d'amidon de blé et de farine de blé type 55, montre que les compositions suivant l'invention possèdent bien des performances améliorées par rapport aux compositions à base d'amidon à savoir,
- une contrainte seuil d'élasticité supérieure, - un allongement à la rupture supérieur,
- un module de flexion supérieur,
- une meilleure processabilité avec notamment une viscosité à l'état fondu plus faible (MVR plus important),

## Revendications

1. Procédé de préparation d'une composition thermoplastique non biodégradable à base de farine végétale comprenant les étapes suivantes :
(a) sélection d'au moins une farine végétale (composant 1) et d'au moins un plastifiant organique (composant 2) de cette farine végétale,
(b) préparation d'une composition plastifiée par mélange thermomécanique de cette farine végétale et de ce plastifiant organique,
(c) préparation d'une farine plastifiée thermoplastique par mélange thermomécanique après incorporation, dans la farine végétale plastifiée obtenue, d'un agent de liaison A (composant 3) porteur d'au moins deux groupements fonctionnels aptes à réagir avec des molécules porteuses de fonctions à hydrogène actif et capables de permettre la fixation, par liaisons covalentes, d'au moins une partie de l'agent plastifiant et d'au moins une partie des acides gras et des protéines contenus dans la farine végétale, ledit agent de liaison ayant une masse molaire inférieure à 5000 g/mol, et étant choisi parmi les diacides et les composés porteurs d'au moins deux fonctions, libres ou masquées, identiques ou différentes, choisies parmi les fonctions isocyanate, carbamoyl- caprolactame, époxyde, halogéno, anhydride d'acide, halogénure d'acyle, oxychlorure, trimétaphosphate et alcoxysilane,
(d) incorporation et dispersion fine par mélange thermomécanique de la farine plastifiée thermoplastique obtenue à l'étape (c) dans au moins un polymère synthétique non biodégradable (composant 4) et éventuellement un agent de liaison B (composant optionnel 5), permettant de lier par liaisons covalentes la composition plastifiée au polymère synthétique.

2. Procédé selon la revendication 1 **caractérisé en ce qu'**une étape de séchage est réalisée entre les étapes (b) et (c) avant l'incorporation de l'agent de liaison A, jusqu'à un taux d'humidité résiduelle inférieur à 5 %, de préférence inférieur à 1 %, en particulier inférieur à 0,1 %.

3. Procédé selon la revendication 1 ou 2 **caractérisé en ce que** l'étape (b), l'étape de séchage, l'étape (c) et, le cas échéant, l'étape (d) sont réalisées successivement dans deux réacteurs différents ou au sein d'un même réacteur, de façon discontinue ou de façon continue et en particulier en ligne, par extrusion réactive.

4. Procédé selon la revendication 1 **caractérisé en ce que** la farine végétale (composant 1) est une farine issue de la mouture des céréales, des tubercules ou des légumineuses, et contient avantageusement entre 10 et 95% en poids d'amidon, de préférence entre 20 et 80% en poids d'amidon et encore plus préférentiellement entre 35 et 70% en poids d'amidon.

5. Procédé selon la revendication 1 **caractérisé en ce que** l'agent plastifiant (composant 2) est choisi dans le groupe comprenant les diols, les triols, les sels d'acides organiques tel que le lactate de sodium, l'urée, les polyols choisis dans le groupe comprenant le glycérol, les polyglycérols, l'isosorbide, les sorbitans, le sorbitol, le mannitol, les sirops de glucose hydrogénés, et les mélanges de ces composés.

6. Procédé selon la revendication 5 **caractérisé en ce que** l'agent plastifiant (composant 2) est incorporé dans la farine végétale à raison de 10 à 150 parts en poids pour 100 parts en poids sec d'amidon contenu dans la farine végétale, de préférence à raison de 25 à 120 parts en poids et en particulier à raison de 40 à 120 parts en poids.

7. Procédé selon la revendication 1 **caractérisé en ce que** l'agent de liaison A (composant 3) est choisi dans le groupe comprenant les composés suivants :
- les diisocyanates, de préférence le méthylènediphényl-diisocyanate (MDI), l'isophorone-diisocyanate (IPDI), le dicyclohexylméthane-diisocyanate (H12MDI), le toluène-diisocyanate (TDI), le naphthalène-diisocyanate (NDI), l'hexaméthylène- diisocyanate (HMDI) ou la lysine-diisocyanate (LDI), le diisocyanate aliphatique de masse molaire 600 g/mol obtenu à partir de dimères de diacide gras,
- les dimères, trimères et tétramères de diisocyanates,
- les triisocyanates, tétraisocyanates ainsi que les homopolymères respectifs des di-, tri- et tétraisocyanates existants,
- les prépolymères diisocyanates dits « isocyanate-free »,
- les prépolymères d'isocyanate de type dendrimères, ne présentant que des fonctions isocyanates réactives en bout de branche, contenant ou non des di ou triisocyanates libres,
- les dialkylcarbonates, notamment les dialkylcarbonates de dianhydrohexitols, et en particulier les dialkylcarbonates d'isosorbide,
- les dicarbamoylcaprolactames, de préférence le 1,1'-carbonyl-bis-caprolactame,
- les diépoxydes,
- les halogénhydrines comportant une fonction époxyde et une fonction halogénure, de préférence l'épichlorhydrine,
- les diacides organiques, de préférence l'acide succinique, l'acide adipique, l'acide glutarique, l'acide oxalique, l'acide malonique, l'acide maléique ou les anhydrides correspondants,
- les polyacides et les polyanhydrides, de préférence l'acide mellitique ou ses dérivés, tels que l'acide trimellitique ou l'acide pyromellitique,
- les oxychlorures, de préférence l'oxychlorure de phosphore,
- les trimétaphosphates, de préférence le trimétaphosphate de sodium,
- les alcoxysilanes, de préférence le tétraéthoxysilane,
- les composés hétérocycliques, de préférence les bis-oxazolines, les bis-oxazolin- 5-ones et les bis-azalactones,
- les dérivés de diesters méthyléniques ou éthyléniques, de préférence les dérivés de carbonates de méthyle ou d'éthyle,
- les mélanges quelconques d'au moins deux quelconques des composés précités.

8. Procédé selon la revendication 1 **caractérisé en ce que** la quantité d'agent de liaison A (composant 3) représente de 0,1 à 20 % en poids sec par rapport au poids sec total de la composition thermoplastique, de manière plus spécifique, entre 0.5 à 15 %, de préférence de 0.8 à 10 %, et encore plus préférentiellement de 0.9 à 5%.

9. Procédé selon la revendication 1 **caractérisé en ce que** le polymère synthétique non biodégradable (composant 4) est un polymère synthétisé à partir de monomères et/ou oligomères d'origine fossile et/ou de monomères et/ou d'oligomères issus de ressources naturelles renouvelables.

10. Procédé selon la revendication 9 **caractérisé en ce que** le polymère synthétique non biodégradable (composant 4) est un polymère choisi dans le groupe comprenant les polyéthylènes (PE), les polypropylènes (PP), les copolymères styrène-éthylène- butylène-styrène (SEBS), les poly(éthylène téréphtalate) amorphes, les polyuréthanes thermoplastiques (TPU).

11. Procédé selon la revendication 1 **caractérisé en ce que** l'agent de liaison B (composant 5) est un polymère non biodégradable synthétisé à partir de monomères et/ou oligomères d'origine fossile et/ou de monomères et/ou oligomères issus de ressources naturelles renouvelables, porteur :
- de fonctions à hydrogène actif, ou
- de fonctions susceptibles de donner, notamment par hydrolyse, des fonctions à hydrogène actif telles que les fonctions alcoxy, en particulier les alcoxysilanes, ou les fonctions chlorure d'acyle, anhydride d'acide, époxyde ou ester, ou
- de fonctions réactives vis-de fonctions à hydrogènes actifs.

12. Procédé selon la revendication 11 **caractérisé en ce que** l'agent de liaison B (composant 5) est un polymère synthétique non biodégradable fonctionnalisé ou greffé par des fonctions hydroxyles, acides, esters, isocyanates ou époxydes.

13. Procédé selon la revendication 12 **caractérisé en ce que** l'agent de liaison B (composant 5) est un polymère synthétique non biodégradable fonctionnalisé ou greffé choisi dans le groupe comprenant les polyéthylènes (PE) et polypropylènes (PP) fonctionnalisés, les copolymères styrène-éthylène-styrène (SEBS) et styrène-éthylène- butylène-styrène (SEBS) fonctionnalisés, les copolymères et terpolymères à base d'éthylène et de motifs ester acrylique, vinyl ester, anhydride maléique et/ou ester de glycidyle, les copolymères de styrène - ester acrylique - anhydride maléique ou glycidyl methacrilate et les polyuréthanes thermoplastiques (TPU).

## Patentansprüche

1. Verfahren zur Herstellung einer nicht biologisch abbaubaren thermoplastischen Zusammensetzung auf Basis von Pflanzenmehl, umfassend die folgenden Schritte:
(a) Auswahl wenigstens eines Pflanzenmehls (Komponente 1) und wenigstens eines organischen Weichmachers (Komponente 2) dieses Pflanzenmehls,
(b) Herstellung einer weichmacherhaltigen Zusammensetzung durch thermomechanisches Mischen dieses Pflanzenmehls und dieses organischen Weichmachers,
(c) Herstellung eines thermoplastischen weichmacherhaltigen Mehls durch thermomechanisches Mischen nach Einbau, in das erhaltene weichmacherhaltige Pflanzenmehl, eines Bindemittels A (Komponente 3), das wenigstens 2 funktionelle Gruppen trägt, die zur Reaktion mit Molekülen geeignet sind, die Gruppen mit aktivem Wasserstoff tragen, und in der Lage sind, ein Anheften über kovalente Bindungen wenigstens eines Teils des Weichmachers und wenigstens eines Teils der im Pflanzenmehl enthaltenen Fettsäuren und Proteine zu ermöglichen, wobei besagtes Bindemittel eine Molekülmasse kleiner 5000 g/mol besitzt und aus Disäuren und Verbindungen ausgewählt ist, die wenigstens zwei freie oder maskierte, identische oder verschiedenen Gruppen tragen, die aus Isocyanat-, Carbamoylcaprolactam-, Epoxid-, Halogen-, Säureanhydrid-, Acylhalogenid-, Oxidchlorid-, Trimetaphosphat- und Alkoxysilan-Gruppen ausgewählt sind,
(d) Einbau und Feinverteilung durch thermomechanisches Mischen des in Schritt (c) erhaltenen thermoplastischen weichmacherhaltigen Mehls in wenigstens ein nicht biologisch abbaubares synthetisches Polymer (Komponente 4) und gegebenenfalls in ein Bindemittel B (optionale Komponente 5), das ermöglicht, die weichmacherhaltige Zusammensetzung an das synthetische Polymer über kovalente Bindungen zu binden.

2. Verfahren gemäß Anspruch 1, **dadurch gekennzeichnet, dass** ein Trocknungsschritt zwischen den Schritten (b) und (c) vor Einbau des Bindemittels A bis zu einem Restfeuchtegehalt unter 5%, bevorzugt unter 1%, insbesondere unter 0,1% durchgeführt wird.

3. Verfahren gemäß Anspruch 1 oder 2, **dadurch gekennzeichnet, dass** der Schritt (b), der Trocknungsschritt, der Schritt (c) und gegebenenfalls der Schritt (d) nacheinander in zwei verschiedenen Reaktoren oder in demselben Reaktor, diskontinuierlich oder kontinuierlich und insbesondere in Reihe mittels reaktiver Extrusion durchgeführt werden.

4. Verfahren gemäß Anspruch 1, **dadurch gekennzeichnet, dass** das Pflanzenmehl (Komponente 1) ein Mehl ist, das durch Mahlen von Getreiden, Knollen oder Leguminosen gewonnen wird und vorteilhafterweise zwischen 10 und 95 Gew.-% Stärke, bevorzugt zwischen 20 und 80 Gew.-% Stärke und noch bevorzugter zwischen 35 und 70 Gew.-% Stärke enthält.

5. Verfahren gemäß Anspruch 1, **dadurch gekennzeichnet, dass** der Weichmacher (Komponente 2) aus der Gruppe ausgewählt ist, umfassend Diole, Triole, Salze organischer Säuren wie Natriumlactat, Harnstoff, Polyole, ausgewählt aus der Gruppe, umfassend Glycerol, Polyglycerole, Isosorbid, Sorbitane, Sorbit, Mannit, hydrierte Glucosesirupe, und Mischungen dieser Verbindungen.

6. Verfahren gemäß Anspruch 5, **dadurch gekennzeichnet, dass** der Weichmacher (Komponente 2) in das Pflanzenmehl in einer Menge von 10 bis 150 Gewichtsteilen, bevorzugt in einer Menge von 25 bis 120 Gewichtsteilen und insbesondere in einer Menge von 40 bis 120 Gewichtsteilen pro 100 Trockengewichtsteile im Pflanzenmehl enthaltener Stärke eingebaut wird.

7. Verfahren gemäß Anspruch 1, **dadurch gekennzeichnet, dass** das Bindemittel A (Komponente 3) aus der Gruppe ausgewählt ist, umfassend die folgenden Verbindungen:
- Diisocyanate, bevorzugt Methylendiphenyldiisocyanat (MDI), Isophorondiisocyanat (IPDI), Dicyclohexylmethandiisocyanat (H12MDI), Toluoldiisocyanat (TDI), Naphthalendiisocyanat (NDI), Hexamethylendiisocyanat (HMDI) oder Lysindiisocyanat (LDI), aliphatisches Diisocyanat mit einer Molmasse von 600 g/mol, das aus Difettsäure-Dimeren erhalten wird,
- Dimere, Trimere und Tetramere von Diisocyanaten,
- Triisocyanate, Tetraisocyanate sowie die jeweiligen Homopolymere von existierenden Di-, Tri- und Tetraisocyanaten,
- Diisocyanat-Präpolymere, die als "isocyanatfrei" bezeichnet werden,
- dendrimere Isocyanat-Präpolymere, die reaktive Isocyanat-Gruppen nur am Verzweigungsende aufweisen und freie Di- oder Triisocyanate enthalten können,
- Dialkylcarbonate, insbesondere Dianhydrohexitol-Dialkylcarbonate und insbesondere Isosorbid-Dialkylcarbonate,
- Dicarbamoylcaprolactame, bevorzugt 1,1'-Carbonyl-bis-caprolactam,
- Diepoxide,
- Halogenhydrine mit einer Epoxid-Gruppe und einem Halogenid, bevorzugt Epichlorhydrin,
- organische Disäuren, bevorzugt Bernsteinsäure, Adipinsäure, Glutarsäure, Oxalsäure, Malonsäure, Maleinsäure oder die korrespondierenden Anhydride,
- Polysäuren und Polyanhydride, bevorzugt Mellitsäure oder ihre Derivate wie Trimellitsäure oder Pyromellitsäure,
- Oxidchloride, bevorzugt Phosphoroxidchlorid,
- Trimetaphosphate, bevorzugt Natriumtrimetaphosphat,
- Alkoxysilane, bevorzugt Tetraethoxysilan,
- heterocyclische Verbindungen, bevorzugt bis-Oxazoline, bis-Oxazolin-5-one und bis-Azalactone,
- Derivate von Methylen- oder Ethylendiestern, bevorzugt Derivate von Methyl- oder Ethylcarbonaten,
- beliebige Mischungen aus wenigstens zwei beliebigen der vorgenannten Verbindungen.

8. Verfahren gemäß Anspruch 1, **dadurch gekennzeichnet, dass** die Menge an Bindemittel A (Komponente 3) 0,1 bis 20 Trockengew.-% bezogen auf das Gesamttrockengewicht der thermoplastischen Zusammensetzung, spezifischer zwischen 0,5 bis 15%, bevorzugt 0,8 bis 10% und noch bevorzugter 0,9 bis 5% beträgt.

9. Verfahren gemäß Anspruch 1, **dadurch gekennzeichnet, dass** das nicht biologisch abbaubare synthetische Polymer (Komponente 4) aus Monomeren und/oder Oligomeren fossilen Ursprungs und/oder aus erneuerbaren natürlichen Ressourcen stammenden Monomeren und/oder Oligomeren synthetisiert ist.

10. Verfahren gemäß Anspruch 9, **dadurch gekennzeichnet, dass** das nicht biologisch abbaubare synthetische Polymer (Komponente 4) aus der Gruppe ausgewählt ist, umfassend Polyethylene (PE), Polypropylene (PP), Styrol-Ethylen-Butylen-Styrol (SEBS)-Copolymere, amorphe Polyethylenterephthalate, thermoplastische Polyurethane (TPU).

11. Verfahren gemäß Anspruch 1, **dadurch gekennzeichnet, dass** das Bindemittel B (Komponente 5) ein nicht biologisch abbaubares Polymer ist, das aus Monomeren und/oder Oligomeren fossilen Ursprungs und/oder aus erneuerbaren natürlichen Ressourcen stammenden Monomeren und/oder Oligomeren synthetisiert ist und Träger ist von:
- Gruppen mit aktivem Wasserstoff, oder
- Gruppen, die besonders mittels Hydrolyse, Gruppen mit aktivem Wasserstoff wie AlkoxyGruppen, insbesondere Alkoxysilane, oder Acylchlorid-, Säureanhydrid-, Epoxid oder EsterGruppen ergeben können, oder
- reaktiven Gruppen gegenüber Gruppen mit aktivem Wasserstoff.

12. Verfahren gemäß Anspruch 11, **dadurch gekennzeichnet, dass** das Bindemittel B (Komponente 5) ein nicht biologisch abbaubares synthetisches Polymer ist, das mit Hydroxyl-, Säure-, Ester-, Isocyanat- oder Epoxid-Gruppen funktionalisiert oder gepfropft ist.

13. Verfahren gemäß Anspruch 12, **dadurch gekennzeichnet, dass** das Bindemittel B (Komponente 5) ein gepfropftes oder funktionalisiertes nicht biologisch abbaubares synthetisches Polymer ist, ausgewählt aus der Gruppe, umfassend funktionalisierte Polyethylene (PE) und Polypropylene (PP), funktionalisierte Styrol-Ethylen-Styrol (SEBS)-Copolymere und Styrol-Ethylen-Butylen-Styrol (SEBS)-Copolymere, Copolymere und Terpolymere auf Basis von Ethylen und Acrylsäureester-, Vinylester-, Maleinsäureanhydrid- und/oder Glycidylester-Einheiten, Styrol-Acrylsäureester-Maleinsäureanhydrid- oder Glycidylmethacrylat-Copolymere und thermoplastische Polyurethane (TPU).

## Claims

1. A process for preparing a non-biodegradable thermoplastic composition based on vegetable flour, comprising the following steps:
(a) selection of at least one vegetable flour (component 1) and at least one organic plasticizer (component 2) of this vegetable flour,
(b) preparation of a plasticized composition by thermomechanical mixing of this vegetable flour and this organic plasticizer,
(c) preparation of a thermoplastic plasticized flour by thermomechanical mixing after incorporation, into the plasticized vegetable flour obtained, of a binding agent A (component 3) carrying at least two functional groups capable of reacting with molecules carrying active hydrogen functions and capable of allowing the covalent binding of at least part of the plasticizing agent and at least part of the fatty acids and proteins contained in the vegetable flour, said binding agent having a molar mass of less than 5000 g/mol, and being chosen among diacids and compounds carrying at least two functions, free or masked, identical or different, chosen among isocyanate, carbamoyl- caprolactam, epoxide, halo, acid anhydride, acyl halide, oxychloride, trimetaphosphate and alkoxysilane functions,
(d) incorporation and fine dispersion by thermomechanical mixing of the thermoplastic plasticized flour obtained in step (c) in at least one non-biodegradable synthetic polymer (component 4) and optionally a binding agent B (optional component 5), enabling the plasticized composition to be covalently bonded to the synthetic polymer.

2. The process as claimed in claim 1, **characterized in that** a drying step is carried out between steps (b) and (c) before the incorporation of binding agent A, up to a residual moisture content of less than 5%, preferably less than 1%, in particular less than 0.1%.

3. The process as claimed in claim 1 or 2, **characterized in that** step (b), the drying step (c) and, if need be, step (d) are carried out successively in two different reactors or within the same reactor, discontinuously or continuously and in particular in line, by reactive extrusion.

4. The process as claimed in claim 1, **characterized in that** the vegetable flour (component 1) is a flour derived from the milling of cereals, tubers or legumes, and advantageously contains between 10 and 95 wt% starch, preferably between 20 and 80 wt% starch and even more preferably between 35 and 70 wt% starch.

5. The process as claimed in claim 1, **characterized in that** the plasticizing agent (component 2) is chosen from the group consisting of diols, triols, salts of organic acids such as sodium lactate, urea, polyols chosen from the group consisting of glycerol, polyglycerols, isosorbide, sorbitans, sorbitol, mannitol, hydrogenated glucose syrups, and mixtures of these compounds.

6. The process as claimed in claim 5, **characterized in that** the plasticizing agent (component 2) is incorporated into the vegetable flour in a proportion of 10 to 150 parts by weight per 100 parts dry weight of starch contained in the vegetable flour, preferably in a proportion of 25 to 120 parts by weight and in particular in a proportion of 40 to 120 parts by weight.

7. The process as claimed in claim 1, **characterized in that** binding agent A (component 3) is chosen from the group consisting of the following compounds:
- diisocyanates, preferably methylenediphenyl-diisocyanate (MDI), isophoronediisocyanate (IPDI), dicyclohexylmethane-diisocyanate (H12MDI), toluene-diisocyanate (TDI), naphthalene-diisocyanate (NDI), hexamethylenediisocyanate (HMDI) or lysine-diisocyanate (LDI), aliphatic diisocyanate of molar mass 600 g/mol obtained from fatty diacid dimers,
- dimers, trimers and tetramers of diisocyanates,
- triisocyanates, tetraisocyanates and the respective homopolymers of existing di-tri- and tetraisocyanates,
- so-called "isocyanate-free" diisocyanate prepolymers,
- isocyanate prepolymers of dendrimers type, having only reactive isocyanate functions at the end of branches, containing or not containing free di or triisocyanates,
- dialkylcarbonates, notably dianhydrohexitol dialkylcarbonates, and in particular isosorbide dialkylcarbonates,
- dicarbamoylcaprolactams, preferably 1,1'-carbonyl-bis-caprolactam,
- diepoxides,
- halohydrins having an epoxide function and a halide function, preferably epichlorohydrin,
- organic diacids, preferably succinic acid, adipic acid, glutaric acid, oxalic acid, malonic acid, maleic acid or the corresponding anhydrides,
- polyacids and polyanhydrides, preferably mellitic acid or its derivatives, such as trimellitic acid or pyromellitic acid,
- oxychlorides, preferably phosphorus oxychloride,
- trimetaphosphates, preferably sodium trimetaphosphate,
- alkoxysilanes, preferably tetraethoxysilane,
- heterocyclic compounds, preferably bis-oxazolines, bis-oxazolin-5-ones and bis-azalactones,
- methylenic or ethylenic diester derivatives, preferably methyl or ethyl carbonate derivatives,
- any mixtures of at least any two of the above compounds.

8. The process as claimed in claim 1, **characterized in that** the amount of binding agent A (component 3) represents from 0.1 to 20% dry weight, based on the total dry weight of the thermoplastic composition, more specifically from 0.5 to 15%, preferably from 0.8 to 10%, and even more preferentially from 0.9 to 5%.

9. The process as claimed in claim 1, **characterized in that** the non-biodegradable synthetic polymer (component 4) is a polymer synthesized from monomers and/or oligomers of fossil origin and/or monomers and/or oligomers derived from renewable natural resources.

10. The process as claimed in claim 9, **characterized in that** the non-biodegradable synthetic polymer (component 4) is a polymer chosen from the group consisting of polyethylenes (PE), polypropylenes (PP), styrene-ethylene- butylene-styrene (SEBS) copolymers, amorphous poly(ethylene terephthalate)s, thermoplastic polyurethanes (TPU).

11. The process as claimed in claim 1, **characterized in that** binding agent B (component 5) is a non-biodegradable polymer synthesized from monomers and/or oligomers of fossil origin and/or monomers and/or oligomers derived from renewable natural resources, carrying:
- active hydrogen functions, or
- functions capable of giving, notably by hydrolysis, active hydrogen functions such as alkoxy functions, in particular alkoxysilanes, or acyl chloride, acid anhydride, epoxide or ester functions, or
- functions reactive to active hydrogen functions.

12. The process as claimed in claim 11, **characterized in that** binding agent B (component 5) is a non-biodegradable synthetic polymer functionalized or grafted with hydroxyl, acid, ester, isocyanate or epoxide functions.

13. The process as claimed in claim 12, **characterized in that** binding agent B (component 5) is a functionalized or grafted non-biodegradable synthetic polymer chosen from the group consisting of functionalized polyethylenes (PE) and polypropylenes (PP), functionalized styrene-ethylene-styrene (SEBS) and styrene-ethylene-butylene-styrene (SEBS) copolymers, copolymers and terpolymers based on ethylene and acrylic ester, vinyl ester, maleic anhydride and/or glycidyl ester units, styrene - acrylic ester - maleic anhydride or glycidyl methacrylate copolymers and thermoplastic polyurethanes (TPU).
